(19) **Europäisches Patentamt European Patent Office Office européen des brevets**

(11) **EP 4 432 375 A1**

(12) **EUROPEAN PATENT APPLICATION**
published in accordance with Art. 153(4) EPC

(43) Date of publication:
18.09.2024  Bulletin 2024/38

(51) International Patent Classification (IPC):
$H01M\ 4/02$ (2006.01)    $H01M\ 50/533$ (2021.01)
$H01M\ 50/538$ (2021.01)

(21) Application number: 23880895.0

(22) Date of filing: 31.01.2023

(86) International application number:
PCT/CN2023/074014

(87) International publication number:
WO 2024/159413 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **Contemporary Amperex Technology Co., Limited**
**Ningde, Fujian 352100 (CN)**

(72) Inventors:
• **XUE, Qingrui**
**Ningde, Fujian 352100 (CN)**

• **ZHANG, Zige**
**Ningde, Fujian 352100 (CN)**
• **LI, Wei**
**Ningde, Fujian 352100 (CN)**
• **ZHANG, Yu**
**Ningde, Fujian 352100 (CN)**
• **ZHAO, Zhengyuan**
**Ningde, Fujian 352100 (CN)**
• **ZHANG, Jinsong**
**Ningde, Fujian 352100 (CN)**

(74) Representative: **Gong, Jinping**
**CocreateIP**
**Neumarkterstr. 21**
**81673 München (DE)**

(54) **BATTERY CELL, BATTERY AND ELECTRIC DEVICE**

(57) Embodiments of this application provide a battery cell, a battery, and an electric device. The electrode assembly (22) includes a body portion (251) and a lead-out portion (252) that are disposed in a first direction (X), the body portion (251) being electrically connected to an electrode terminal (241) via the lead-out portion (252). The lead-out portion (252) includes a tab portion (253) and a conductive structure (254). A first end of the conductive structure (254) is welded to the tab portion (253) to form a welded zone (255), a second end of the conductive structure (254) is connected to the electrode terminal (241), and the conductive structure (254) extends along a direction leaving the body portion (251). A melting zone (26) is provided between the welded zone (255) and the body portion (251). The technical solution of this application can reduce the probability of thermal runaway of batteries.

FIG. 6

EP 4 432 375 A1

# Description

## TECHNICAL FIELD

This application relates to the field of battery technologies, and in particular, to a battery cell, a battery, and an electric device.

## BACKGROUND

Energy conservation and emission reduction are crucial to sustainable development of the automobile industry. In this context, electric vehicles, with their advantages in energy conservation and emission reduction, have become an important part of sustainable development of the automobile industry. For electric vehicles, battery technology is an important factor in connection with their development.

In the development of battery technology, in addition to improving the performance of the battery, the occurrence of thermal runaway inside batteries is also a non-negligible issue. If thermal runaway occurs inside a battery, the battery becomes unusable. Therefore, how the probability of thermal runaway inside batteries is reduced is an urgent problem to be resolved in battery technology.

## SUMMARY

In view of the foregoing issue, embodiments of this application provide a battery cell, a battery, and an electric device, to reduce the probability of thermal runaway in batteries.

According to a first aspect, a battery cell is provided, including an electrode assembly including a body portion and a lead-out portion that are disposed in a first direction, the body portion being electrically connected to an electrode terminal via the lead-out portion. The lead-out portion includes a tab portion and a conductive structure. A first end of the conductive structure is welded to the tab portion to form a welded zone, a second end of the conductive structure is connected to the electrode terminal, and the conductive structure extends in a direction leaving the body portion. A melting zone is provided between the welded zone and the body portion.

In this embodiment of this application, the electrode assembly includes the body portion and the lead-out portion. Further, the lead-out portion includes the tab portion and the conductive structure. The conductive structure is welded to the tab portion to form the welded zone, and the melting zone is provided between the welded zone and the body portion. With the melting zone provided between the body portion and the welded zone and the welded zone formed by welding the tab portion to the conductive structure, the melting zone serves as a fuse in the battery cell and therefore can blow when a large current passes through, preventing risks such as lithium precipitation and excessive heat generation caused by the passage of the large current in the electrode assembly, thus reducing the risk of thermal runaway in the battery. In addition, the conductive structure is directly electrically connected to the electrode terminal without using another component such as an adapter sheet, thereby increasing the weight energy density and production efficiency of the battery and reducing production costs.

In a possible embodiment, in a second direction, a size of the melting zone is larger than a size of the conductive structure, the second direction being perpendicular to the first direction and parallel to the tab portion.

In this embodiment of this application, with the welded zone formed by the tab portion and the conductive structure and the melting zone located between the body portion and the welded zone, the size of the melting zone in the second direction is larger than the size of the conductive structure; in other words, the melting zone exceeds the conductive structure in the second direction.

In a possible embodiment, in the second direction, a size of the melting zone is not smaller than half the size of the body portion.

In this embodiment of this application, making the size of the melting zone in the second direction not smaller than half the size of the body portion can increase the current flow area of the melting zone and reduce heat generation.

In a possible embodiment, the body portion includes a straight portion and a bent portion.

In this embodiment of this application, when the electrode assembly is of a wound type, that is, when multiple electrode plates are wound to form the electrode assembly, the body portion of the electrode assembly includes the straight portion and the bent portion.

In a possible embodiment, in the second direction, the size of the melting zone is not larger than a size of the straight portion.

In this embodiment of this application, the size of the melting zone in the second direction is made to be not larger than the size of the straight portion, that is, the melting zone does not need to maintain bent. This can reduce the production difficulty and is advantageous to wide-scale production.

In a possible embodiment, the electrode assembly includes multiple electrode plates, where the electrode plate includes a non-metal layer and a metal layer disposed on two sides of the non-metal layer, and the conductive structure is welded to the metal layer of the tab portion to form the welded zone.

In this embodiment of this application, the electrode assembly includes multiple electrode plates. Further, the electrode plate includes the non-metal layer and the metal layer, where the metal layer is disposed on two sides of the non-metal layer. Since the electrode plate is provided with the non-metal layer, the thickness of the metal layer can be reduced. As a result, burrs generated at a part of the metal layer punctured by a foreign matter are small, making it difficult to puncture the separator. The electrode plate including the non-metal layer and metal layer disposed on two sides of the non-metal layer can reduce the risk of short circuits of the battery caused by a foreign matter puncturing the metal layer.

In a possible embodiment, the electrode assembly includes multiple electrode plates, where the electrode plate includes a non-metal layer and a metal layer disposed on two sides of the non-metal layer, and the conductive structure is welded to the metal layer of the tab portion to form the welded zone.

In this embodiment of this application, the electrode assembly includes multiple electrode plates. Further, the electrode plate includes the non-metal layer and the metal layer, where the metal layer is disposed on two sides of the non-metal layer. Since the electrode plate is provided with the non-metal layer, the thickness of the metal layer can be reduced. As a result, burrs generated at a part of the metal layer punctured by a foreign matter are small, making it difficult to puncture the separator. The electrode plate including the non-metal layer and metal layer disposed on two sides of the non-metal layer can reduce the risk of short circuits of the battery caused by a foreign matter puncturing the metal layer.

In a possible embodiment, in a second direction, a size of the melting zone is smaller than a size of the conductive structure, the second direction being perpendicular to the first direction and parallel to the tab portion.

In this embodiment of this application, with the welded zone formed by the tab portion and the conductive structure and the melting zone located between the body portion and the welded zone, the size of the melting zone in the second direction is smaller than the size of the conductive structure; in other words, the melting zone is recessed into the conductive structure in the second direction.

In a possible embodiment, in a third direction, a size of the melting zone is smaller than a size of the conductive structure, the third direction being perpendicular to the first direction and perpendicular to the tab portion.

In this embodiment of this application, with the welded zone formed by the tab portion and the conductive structure and the welded zone located between the body portion and the welded zone, the size of the melting zone in the third direction is smaller than the size of the conductive structure; in other words, the tab portion is recessed into the conductive structure in the third direction.

In a possible embodiment, the melting zone is provided with a melting hole.

In this embodiment of this application, providing the melting hole on the melting zone can further reduce the current flow capability of the melting zone, thereby further reducing the risk of thermal runaway in the battery.

In a possible embodiment, the battery cell further includes a separator, where the separator covers the melting hole.

In this embodiment of this application, covering the melting hole with the separator can prevent burrs generated during preparation of the melting hole from puncturing the electrode plate, while such puncturing affects performance of the battery.

In a possible embodiment, the tab portion includes a first tab portion and a second tab portion, where the first tab portion is disposed between the body portion and the second tab portion, and in the second direction, a size of the first tab portion is larger than a size of the second tab portion.

In this embodiment of this application, in the second direction, the size of the first tab portion is larger than the size of the second tab portion. In other words, the first tab portion connected to the body portion has a larger size in the second direction, which can increase the connection area between the body portion and the tab portion, thereby increasing the connection strength between the two. Additionally, the second tab portion having a smaller size can reduce the space occupied by the entire tab portion in the battery while a stable connection between the tab portion and the body portion is ensured.

In a possible embodiment, the welded zone includes a first welded zone and a second welded zone, where the first welded zone is located on the first tab portion, the second welded zone is located on the second tab portion, and in the second direction, a size of the first welded zone is larger than a size of the second welded zone.

In this embodiment of this application, the first welded zone is located on the first tab portion that has a larger size in the second direction, allowing for a larger welding area between the conductive structure and the first tab portion, thereby increasing the connection strength between the two.

In a possible embodiment, a first protective layer is provided at an end of the tab portion close to the body portion, where the first protective layer is disposed between the body portion and the melting zone.

In a possible embodiment, a first protective layer is provided at an outer surface of a part of the tab portion, where the part of the tab portion is not covered by the conductive structure and does not serve as the melting zone, and the first protective layer is disposed between the body portion and the melting zone.

In this embodiment of this application, the first protective layer is disposed on a part of the tab portion that is neither covered by the active substance nor connected to the conductive structure and that does not serve as the melting zone. Further, the stiffness of the first protective layer can be larger than the stiffness of the metal layer. This allows the first protective layer to have a larger stiffness so as to support the tab portion and limit deformation of the tab portion, thereby preventing the metal layer from rupturing, and improving the current flow capability of the electrode plate.

In a possible embodiment, in the first direction, a size of the first protective layer is 0.1 mm to 6 mm.

In this embodiment of this application, the size of the first protective layer in the first direction directly affects the effects of the first protective layer in protecting the tab portion. If the size of the first protective layer is too small, the adhesion between the first protective layer and the tab portion is weak, making them prone to fall off, and the coverage area is small, leading to weak capability to inhibit deformation of the tab portion is weak. If the size of the first protective layer is too large, the connection area between the tab portion and the conductive structure is reduced, decreasing the current flow capability between the conductive structure and the electrode assembly. The first protective layer with the size in the first direction maintained within 0.1 mm to 6 mm can not only support the tab portion but also ensure good current flow capability between the conductive structure and the electrode assembly.

In a possible embodiment, in the first direction, a size of the first protective layer is 0.5 mm to 4 mm.

In this embodiment of this application, keeping the size of the first protective layer in the first direction within 0.5 mm to 4 mm can provide support to the tab portion and reserve enough region for the melting zone.

In a possible embodiment, in the first direction, a size of the melting zone is 0.01 mm to 2 mm.

In this embodiment of this application, the first protective layer is disposed on a part of the tab portion that is neither covered by the active substance nor connected to the conductive structure and that does not serve as the melting zone. If the size of the melting zone is too small, a part of the conductive structure may overlap with the first protective layer, resulting in tilt of the conductive structure and thus poor connection, thereby affecting the service life of the battery. Making the size of the melting zone in the first direction fall within 0.01 mm to 2 mm can ensure the normal service life of the battery.

In a possible embodiment, in the first direction, a size of the first protective layer is 0.05 mm to 1.5 mm.

In this embodiment of this application, making the size of the melting zone in the first direction fall within 0.05 mm to 1.5 mm can further ensure the normal service life of the battery.

In a possible embodiment, a second protective layer is disposed on a surface of the welded zone away from the tab portion.

In this embodiment of this application, since the conductive structure and the tab portion are connected through welding, the surface of the welded zone may become uneven. As a result, the separator may be punctured, posing a short circuit risk. With the second protective layer provided on the surface of the welded zone, the surface of the welded zone can be separated from the separator, preventing the separator from being punctured, thus further improving the safety performance of the battery.

In a possible embodiment, both the first protective layer and the second protective layer are made of an insulating material.

In this embodiment of this application, the insulating material does not have the function of electrical connection. Both the first protective layer and the second protective layer being made of an insulating material can prevent the first protective layer and second protective layer from affecting a current flow path of the electrode plate in the electrode assembly, thus ensuring the safety of the electrical connection of the electrode plate.

According to a second aspect, a battery is provided, including the battery cell according to any one of the embodiments of the first aspect.

According to a third aspect, an electric device is provided, including the battery according to the second aspect, where the battery is configured to supply electric energy.

In the technical solutions of this application, the electrode assembly includes the body portion and the lead-out portion, and the lead-out portion includes the tab portion and the conductive structure. In the technical solutions of this application, the first end of the conductive structure is welded to the tab portion to form the welded zone, the melting zone is provided between the welded zone and the body portion, and another end of the conductive structure is directly connected to the electrode terminal. The melting zone can serve as a fuse and therefore can melt the tab portion when a large current passes through, preventing risks of lithium precipitation and excessive heat generation caused by the passage of the large current in the electrode assembly, thus reducing the risk of thermal runaway in the battery. In addition, the conductive structure is directly connected to the end cover without using another component such as an adapter sheet, thereby increasing the weight energy density and production efficiency of the battery and reducing production costs.

**BRIEF DESCRIPTION OF DRAWINGS**

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.

FIG. 1 is a schematic structural diagram of a vehicle according to an embodiment of this application;
FIG. 2 is a schematic structural exploded view of a battery according to an embodiment of this application;
FIG. 3 is a schematic structural exploded view of a battery cell according to an embodiment of this application;
FIG. 4 is a schematic structural diagram of an electrode assembly according to an embodiment of this application;

FIG. 5 is a schematic structural diagram of an electrode assembly according to another embodiment of this application;

FIG. 6 is a partially enlarged view of region A of FIG. 5;

FIG. 7 is another partially enlarged view of region A of FIG. 5;

FIG. 8 is a cross-sectional view of an electrode plate according to an embodiment of this application;

FIG. 9 is still another partially enlarged view of region A of FIG. 5;

FIG. 10 is a cross-sectional view of an electrode plate according to another embodiment of this application; and

FIG. 11 is a cross-sectional view of an electrode plate according to still another embodiment of this application.

In the accompanying drawings, the figures are not necessarily drawn to scale.

Reference signs in the description of embodiments are described as follows:

vehicle 1;
battery 10, controller 30, and motor 40;
box 11, battery cell 20, housing 21, electrode assembly 22, accommodating space 23, end cover 24, electrode plate 25, and melting zone 26;
upper box body 111, lower box body 112, positive electrode plate 221a, negative electrode plate 221b, separator 221c, first tab 222a, second tab 222b, electrode terminal 241, positive electrode terminal 241a, negative electrode terminal 241b, body portion 251, lead-out portion 252, tab portion 253, conductive structure 254, welded zone 255, non-metal layer 256, metal layer 257; and
active substance layer 2511, straight portion 2512, bent portion 2513, first protective layer 2514, first tab portion 2531, second tab portion 2532, second protective layer 2533, first welded zone 2551, second welded zone 2552, first direction X, second direction Y, and third direction Z.

## DESCRIPTION OF EMBODIMENTS

The following further describes embodiments of this application in detail with reference to the accompanying drawings and examples. The detailed description of the embodiments and the accompanying drawings are intended to illustrate the principle of this application, rather than to limit the scope of this application, meaning this application is not limited to the embodiments described herein.

In the descriptions of this application, it should be noted that, unless otherwise stated, "plurality" means two or more; and the orientations or positional relationships indicated by the terms "upper", "lower", "left", "right", "inside", "outside", and the like are merely intended to help the descriptions of this application and simplify the descriptions rather than to indicate or imply that the apparatuses or components must have specific orientations, or be constructed and manipulated with specific orientations, and therefore shall not be construed as limitations on this application. In addition, the terms "first", "second", and "third" are merely intended for a purpose of description, and shall not be understood as an indication or implication of relative importance. "Vertical" means being vertical with an allowable range of error other than being strictly vertical. "Parallel" means being parallel with an allowable range of error other than being strictly parallel.

The orientation terms appearing in the following description all are directions shown in the figures, and do not limit the specific structure of this application. In the descriptions of this application, it should be further noted that unless otherwise specified and defined explicitly, the terms "installment", "link", and "connection" should be understood in their general senses. For example, the terms may be a fixed connection, a detachable connection, or an integrated connection, or may be a direct connection, or an indirect connection through an intermediate medium. A person of ordinary skill in the art can understand specific meanings of these terms in this application based on specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "include", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. A person skilled in the art can clearly and implicitly understand that the embodiments described in this application can be combined with other embodiments.

In the embodiments of this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell may include an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be graphite, carbon, silicon, or the like. To allow a large current to pass through without any fusing, multiple positive tabs are provided and stacked together, and multiple negative tabs are provided and stacked together. The separator may be made of polypropylene (polypropylene, PP), polyethylene (polyethylene, PE), or the like. In addition, the electrode assembly may be a wound structure or a laminated structure, but the embodiments of this application are not limited thereto.

Currently, from a perspective of market development, application of electric vehicle batteries is becoming more and more extensive. Electric vehicle batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous expansion of application fields of electric vehicle batteries, market demands for electric vehicle batteries are also expanding.

For the development of battery technologies, many design factors need to be considered, for example, performance parameters such as energy density, cycling performance, discharge capacity, and charge and discharge rate, as well as safety performance and production costs of batteries.

Currently, in some batteries made from special current collectors such as composite substrate current collectors, because the conductive metal layer is relatively thin, if the tab portion responsible for current flow in the composite substrate current collector is designed in the same way as that of a conventional battery having a copper or aluminum foil current collector, the secondary current flow capability is lower than the current flow capability the adapter sheet. Therefore, the size of the tab portion of the battery needs to be designed based on the current flow capability of the adapter sheet for a proper match. When a large tab portion is designed to match the current flow capability of the adapter sheet, the large tab portion interferes with the structure of the end cover of the battery to some degree, affecting the performance of the battery. Therefore, how the safety performance of batteries prepared using such composite substrate current collector is an issue to be solved urgently at present.

In view of this, an embodiment of this application provides an electrode assembly. The electrode assembly includes a body portion and a lead-out portion. The lead-out portion includes a tab portion and a conductive structure. A first end of the conductive structure is welded to the tab portion to form a welded zone, a melting zone is provided between the welded zone and the body portion, and another end of the conductive structure is directly connected to an electrode terminal. The melting zone can serve as a fuse and therefore can melt the tab portion when a large current passes through, preventing risks of lithium precipitation and excessive heat generation caused by the passage of the large current in the electrode assembly, thus reducing the risk of thermal runaway in the battery. In addition, the conductive structure is directly connected to the end cover without using another component such as an adapter sheet, thereby increasing the weight energy density and production efficiency of the battery and reducing production costs.

The technical solutions described in the embodiments of this application are all applicable to various devices using batteries, such as mobile phones, portable devices, notebook computers, electric bicycles, electric toys, electric tools, electric vehicles, ships, and spacecraft. For example, the spacecraft includes planes, rockets, space shuttles, spaceships, and the like.

It should be understood that the technical solutions described in the embodiments of this application are not only applicable to the devices described above, but also applicable to all devices using batteries. However, for brevity of description, in the following embodiments, the electric vehicle is used as an example for description.

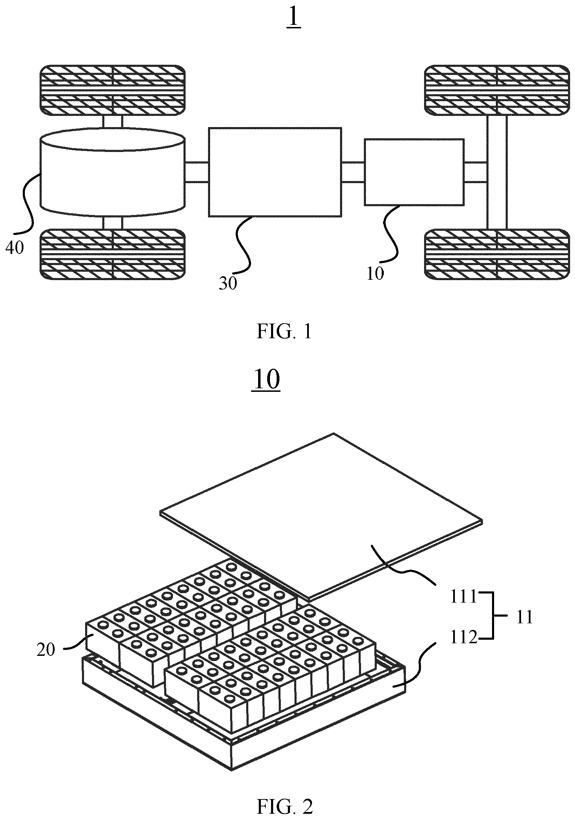

For example, FIG. 1 is a schematic structural diagram of a vehicle according to an embodiment of this application. As shown in FIG. 1, the vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

To meet different requirements for power use, the battery 10 may include a plurality of battery cells. FIG. 2 is a schematic structural exploded view of a battery 10 according to an embodiment of this application. As shown in FIG. 2, the battery 10 may include a plurality of battery cells 20. According to different requirements for electricity, the number of the battery cells 20 may be set to any numerical value. The multiple battery cells 20 may be connected in series, in parallel, or in series and parallel to achieve greater capacity or power. Because the number of battery cells 20 included in each battery 10 may be large, for ease of installation, the battery cells 20 may be arranged in groups, and each group of battery cells 20 forms a battery module. The number of battery cells 20 included in the battery module is not limited, and may be set according to requirements. A battery may include multiple battery modules. These battery modules may be connected in series, parallel, or series-parallel.

Optionally, the battery 10 may further include other structures. For example, the battery 10 may also include a busbar that is used to implement electrical connection between the multiple battery cells 20, for example, in parallel, in series, or in hybrid connection. Specifically, the busbar may enable the electrical connection between the battery cells 20 by connecting the electrode terminals of the battery cells 20. Further, the busbar may be fixed to the electrode terminals of battery cells 20 by welding. Electrical energy of the plurality of battery cells 20 can be further drawn out of the box through a conductive mechanism. Optionally, the conductive structure may also belong to the busbar.

The battery 10 may further include a box 11 (or referred to as a cover), where the box 11 has a hollow structure inside, and the plurality of battery cells 20 are accommodated in the box 11. As shown in FIG. 2, the box 11 may include two portions: an upper box body 111 and a lower box body 112. The upper box body 111 and the lower box body 112 are snap-fitted together. Shapes of the upper box body 111 and the lower box body 112 may be determined based on a shape of the plurality of combined battery cells 20, and at least one of the upper box body 111 and the lower box body 112 has an opening. For example, one of the upper box body 111 and the lower box body 112 included in the box 11 is a hollow cuboid with an opening, and the other is plate shaped for covering the opening. For example, as shown in FIG. 2, the lower box body 112 is a hollow cuboid and has only one face with an opening and the upper box body 111 is plate shaped. In such case, the upper box body 111 covers the opening of the lower box body 112 to form the box 11 with a closed chamber. The chamber may be configured to accommodate the multiple battery cells 20.

Optionally, the upper box body 111 and the lower box body 112 included in the box 11 in this embodiment of this application may be in other shapes. For example, the upper box body 111 and the lower box body 112 each may be a hollow cuboid and have only one face with an opening, where the opening of the upper box body 111 is disposed opposite the opening of the lower box body 112, and the upper box body 111 and the lower box body 112 are snap-fitted to form the box 11 with a closed chamber. The multiple battery cells 20 are connected in parallel, in series, or in series-parallel, and then placed into the box formed after the upper box body 111 and the lower box body 112 are snap-fitted.

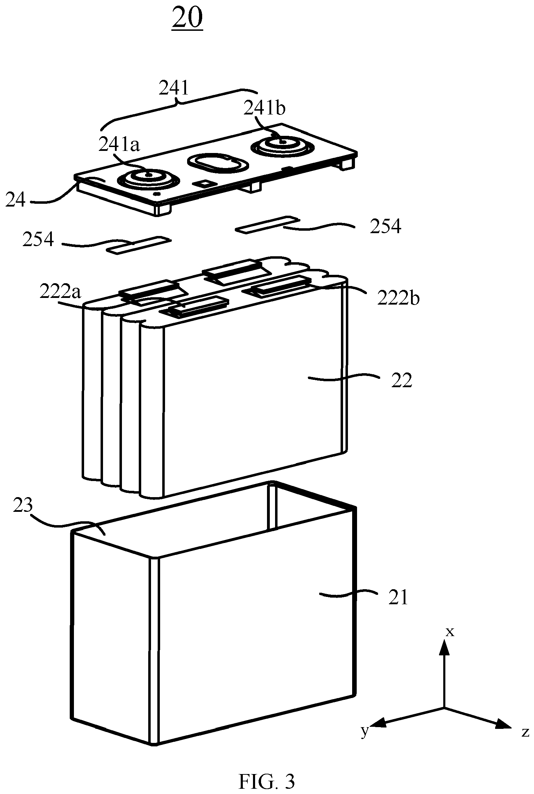

FIG. 3 is a schematic structural exploded view of a battery cell 20 according to an embodiment of this application. As shown in FIG. 3, the battery cell 20 includes one or more electrode assemblies 22, a housing 21, and an end cover 24. The housing 21 and the end cover 24 form an outer shell or battery case. The wall of the housing 21 as well as the end cover 24 are referred to as the walls of the battery cell 20. For a rectangular-type battery cell 20, the walls of the housing 21 include a bottom wall and four side walls, where the bottom wall and the four side walls are connected to form an accommodating space 23 for placing the electrode assembly 22. The housing 21 depends on a combined shape of the one or more electrode assemblies 22. For example, the housing 21 may be a hollow cuboid, a cube, or a cylinder, and one surface of the housing 21 has an opening for placing the one or more electrode assemblies 22 into the housing 21. For example, when the housing 21 is a hollow cuboid or cube, one face of the housing 21 is an opening face, which means that the face has no wall so that the inside and the outside of the housing 21 are communicated. When the housing 21 is a hollow cylinder, the end face of the housing 21 is an opening face, which means that the end face has no wall so that the inside and the outside of the housing 21 are communicated. The end cover 24 covers the opening of the accommodating space 23 and is coupled to the housing 21 to form a closed cavity in which the electrode assembly 22 is placed. The housing 21 is filled with an electrolyte, for example, a liquid electrolyte.

The battery cell 20 may also include two electrode terminals 241 and the two electrode terminals 241 may be disposed on the end cover 24. The end cover 24 is generally in a shape of a flat plate, and two electrode terminals 241 are fixed on a flat surface of the end cover 24. The two electrode terminals 241 are a positive electrode terminal 241a and a negative electrode terminal 241b respectively. Each electrode terminal 241 is provided with one corresponding conductive structure 254 that is located between the end cover 24 and the electrode assembly 22 and that is configured to electrically connect the electrode assembly 22 to the electrode terminal 241.

As shown in FIG. 3, each electrode assembly 22 has a first tab 222a and a second tab 222b. The first tab 222a and the second tab 222b have opposite polarities. For example, when the first tab 222a is a positive tab, the second tab 222b is a negative tab. In this embodiment of this application, the first tabs 222a of the one or more electrode assemblies 22 are connected to one electrode terminal 241 through one conductive structure 254, and the second tabs 222b of the one or more electrode assemblies 22 are connected to the other electrode terminal 241 through the other conductive structure 254. For example, the positive electrode terminal 241a is connected to the positive electrode tab through one conductive structure 254, and the negative electrode terminal 241b is connected to the negative electrode tab through the other conductive structure 254.

In the battery cell 20, one or more electrode assemblies 22 may be provided depending on an actual need. As shown in FIG. 3, the battery cell 20 is provided with four independent electrode assemblies 22.

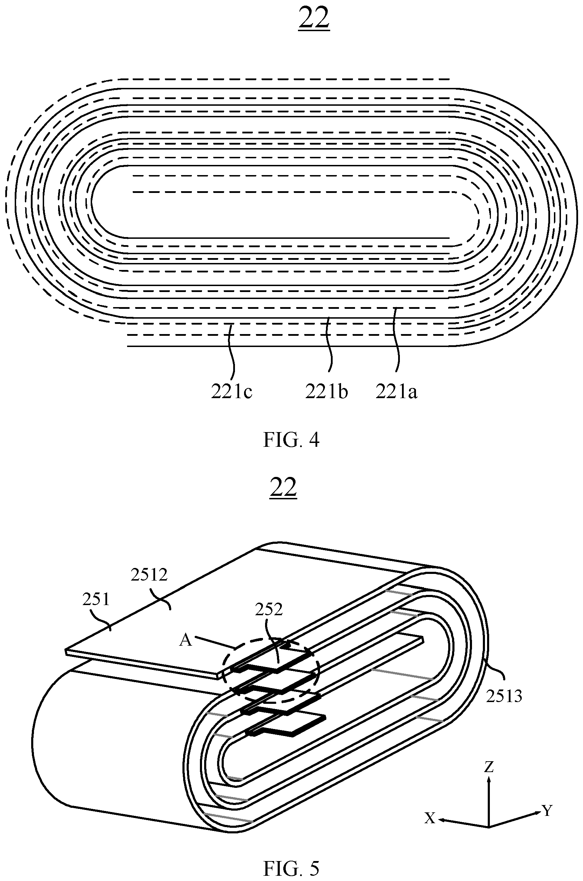

FIG. 4 is a schematic structural diagram of an electrode assembly according to an embodiment of this application. FIG. 5 is a schematic structural diagram of an electrode assembly according to another embodiment of this application. As shown in FIG. 4 and FIG. 5, the electrode assembly 22 includes multiple electrode plates 25. The multiple electrode plates 25 are wound to form the electrode assembly 22. More specifically, the positive electrode plate 221a, the negative electrode plate 221b, and the separator 221c are stacked sequentially and wound to form a jelly-like electrode assembly 22. The electrode assembly 22 may alternatively be a laminated electrode assembly 22. This is not particularly limited in this application.

The battery 10 may be a pouch battery, and the electrode assembly 22 formed by winding the positive electrode plate 221a, negative electrode plate 221b, and separator 221c can be directly placed in the packaging bag. The packaging bag may be made of aluminum-plastic film. Certainly, the battery 10 may alternatively be a hard-shell battery as mentioned before.

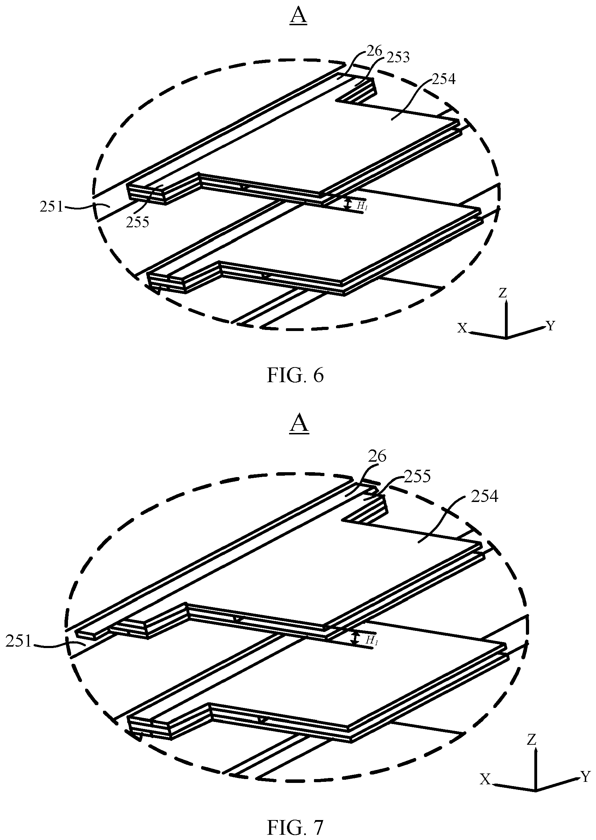

FIG. 6 is a partially enlarged view of region A of FIG. 5. As shown in FIG. 5 and FIG. 6, the electrode assembly 22 includes a body portion 251 and a lead-out portion 252 that are disposed in a first direction X, the body portion 251 being electrically connected to an electrode terminal 241 via the lead-out portion 252. The lead-out portion 252 includes a tab portion 253 and a conductive structure 254. A first end of the conductive structure 254 is welded to the tab portion 253 to form a welded zone 255, a second end of the conductive structure 254 is connected to the electrode terminal 241, and the conductive structure 254 extends along a direction leaving the body portion 251. A melting zone 26 is provided between the welded zone 255 and the body portion 251.

The electrode assembly 22 includes the body portion 251 and the lead-out portion 252. More specifically, the lead-out portion 252 includes the tab portion 253 and the conductive structure 254. The conductive structure 254 is welded to the tab portion 253 to form the welded zone 255, and the melting zone 26 is provided between the welded zone 255 and the body portion 251.

The first end of the conductive structure 254 is an end of the conductive structure 254 closer to the tab portion 253, and the second end of the conductive structure 254 is an end of the conductive structure 254 farther away from the tab portion 253.

In the foregoing solution, with the melting zone 26 provided between the body portion 251 and the welded zone 255 and the welded zone 255 formed by welding the tab portion 253 to the conductive structure 254, the melting zone 26 serves as a fuse in the battery cell 20 and therefore can blow when a large current passes through, preventing risks such as lithium precipitation and excessive heat generation caused by the passage of the large current in the electrode assembly 22, thus reducing the risk of thermal runaway in the battery. In addition, the conductive structure 254 is directly electrically connected to the electrode terminal 241 without using another component such as an adapter sheet, thereby increasing the weight energy density and production efficiency of the battery 10 and reducing production costs.

Additionally, the lead-out portion 252 includes the tab portion 253 and the conductive structure 254, the conductive structure 254 is welded to the tab portion 253

to form the welded zone 255, and the melting zone 26 is provided between the welded zone 255 and the body portion 251. The melting zone 26 herein may be a part of the tab portion 253 or exist independently. This is not limited in this application.

FIG. 7 is another partially enlarged view of region A of FIG. 5. As shown in FIG. 7, in some embodiments, in a second direction Y, a size of the melting zone 26 is larger than a size of the conductive structure 254, the second direction Y being perpendicular to the first direction X and parallel to the tab portion 253.

With the melting zone 26 located between the welded zone 255 and the body portion 251, if the size of the melting zone 26 in the second direction Y is larger than that of the conductive structure 254, the size of the melting zone 26 in the first direction X or another direction may be smaller than that of the conductive structure 254. Only the size in the second direction Y is limited herein without particularly limiting the sizes in other directions.

In the foregoing solution, with the welded zone 255 formed by the tab portion 253 and the conductive structure 254 and the melting zone 26 located between the body portion 251 and the welded zone 255, the size of the melting zone 26 in the second direction Y is larger than the size of the conductive structure 254; in other words, the melting zone 26 exceeds the conductive structure 254 in the second direction Y

In some embodiments, in the second direction Y, a size of the melting zone 26 is not smaller than half the size of the body portion 251.

Properly increasing the size of the melting zone 26 in the second direction Y helps to increase the current flow area of the melting zone 26.

In the foregoing solution, with the size of the melting zone 26 in the second direction Y not smaller than half the size of the body portion 251 can increase the current flow area of the melting zone 26 and reduce heat generation.

Referring to FIG. 5, in some embodiments, the body portion 251 includes a straight portion 2512 and a bent portion 2513.

When the electrode assembly 22 is a wound-type electrode assembly 22, it includes the straight portion 2512 and the bent portion 2513.

In the foregoing solution, when the electrode assembly 22 is of a wound type, that is, when multiple electrode plates 25 are wound to form the electrode assembly 22, the body portion 251 of the electrode assembly 22 includes the straight portion 2512 and the bent portion 2513.

In some embodiments, in the second direction Y, the size of the melting zone 26 is not larger than a size of the straight portion 2512.

In the foregoing solution, the size of the melting zone 26 in the second direction Y is made to be not larger than the size of the straight portion 2512; in other words, the melting zone 26 does not need to maintain bent. This can reduce the production difficulty and is advantageous to wide-scale production.

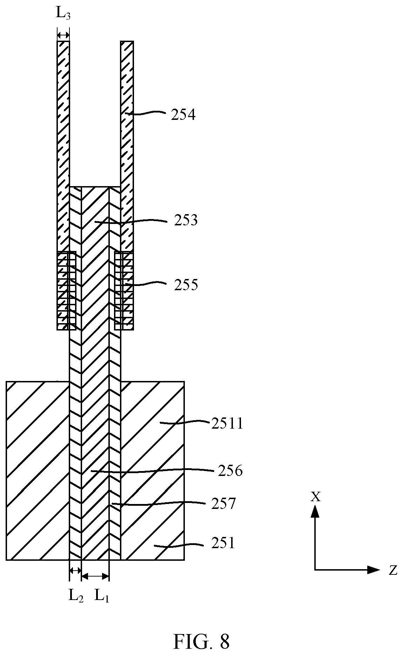

FIG. 8 is a cross-sectional view of an electrode plate according to an embodiment of this application. As shown in FIG. 5 and FIG. 8, in some embodiments, the electrode assembly 22 includes multiple electrode plates 25, where the electrode plate 25 includes a non-metal layer 256 and a metal layer 257 disposed on two sides of the non-metal layer 256, and the conductive structure 254 is welded to the metal layer 257 of the tab portion 253 to form the welded zone 255.

The electrode plate 25 includes the non-metal layer 256 and the metal layer 257, where the metal layer 257 is disposed on two sides of the non-metal layer 256. Since the electrode assembly 22 is provided with the non-metal layer 256, the thickness of the metal layer 257 can be reduced. As a result, burrs generated at a part of the metal layer 257 punctured by a foreign matter are small, making it difficult to puncture the separator 221c.

More specifically, in the second direction Y, the size $L_1$ of the non-metal layer 256 may be 1 $\mu$m to 20 $\mu$m, the size $L_2$ of the metal layer 257 may be 0.1 $\mu$m to 10 $\mu$m, and the size $L_3$ of the conductive structure 254 may be 6 $\mu$m to 15 $\mu$m. Because the metal layer 257 is relatively thin, burrs generated by the metal layer 257 during cutting are small, making it difficult to puncture the separator 221c of a dozen micrometers, thereby avoiding short circuits and improving the safety performance.

Additionally, the non-metal layer 256 may be an inorganic material or an organic material, or a conductive non-metal material or a non-conductive non-metal material, that is, an insulating material. This is not limited in this application.

In the foregoing solution, with the electrode plate 25 including the non-metal layer 256 and the metal layer 257 disposed on two sides of the non-metal layer 256, short circuits in the battery 10 can be avoided, thereby improving the safety performance of the battery 10.

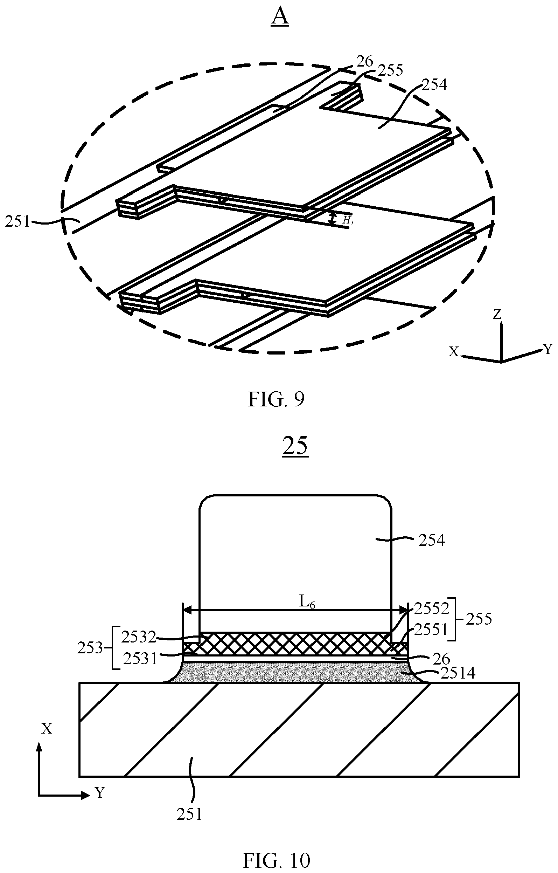

FIG. 9 is still another partially enlarged view of region A of FIG. 5. As shown in FIG. 9, in some embodiments, in a second direction Y, a size of the melting zone 26 is smaller than a size of the conductive structure 254, the second direction Y being perpendicular to the first direction X and parallel to the tab portion 253.

With the melting zone 26 located between the welded zone 255 and the body portion 251, if the size of the melting zone 26 in the second direction Y is smaller than that of the conductive structure 254, the size of the melting zone 26 in the first direction X or another direction may be larger than that of the conductive structure 254. Only the size in the second direction Y is limited herein without particularly limiting the size in other directions.

In the foregoing solution, with the welded zone 255 formed by the tab portion 253 and the conductive structure 254 and the welded zone 255 located between the body portion 251 and the welded zone 255, the size of the melting zone 26 in the second direction Y is smaller than the size of the conductive structure 254; in other words, the melting zone 26 is recessed into the conductive structure 254 in the second direction Y

In some embodiments, in a third direction Z, a size of the melting zone 26 is smaller than a size of the conductive structure 254, the third direction Z being perpendicular to the first direction X and perpendicular to the tab portion 253.

With the melting zone 26 located between the welded zone 255 and the body portion 251, if the size of the melting zone 26 in the third direction Z is smaller than that of the conductive structure 254, the size of the melting zone 26 in the first direction X or another direction may be larger than that of the conductive structure 254. Only the size in the third direction Z is limited herein without particularly limiting the size in other directions.

In the foregoing solution, with the welded zone 255 formed by the tab portion 253 and the conductive structure 254 and the welded zone 255 located between the body portion 251 and the welded zone 255, the size of the melting zone 26 in the third direction Z is smaller than the size of the conductive structure 254; in other words, the tab portion 253 is recessed into the conductive structure 254 in the third direction Z.

In some embodiments, the melting zone 26 is provided with a melting hole.

In the foregoing solution, providing the melting hole on the melting zone 26 can further reduce the current flow capability of the melting zone 26, thereby further reducing the risk of thermal runaway in the battery 10.

In some embodiments, the battery cell 20 further includes a separator 221c, where the separator 221c covers the melting hole.

As mentioned earlier, the multiple electrode plates 25 form the electrode assembly 22. When the melting hole is provided on the melting zone 26, it is likely that burrs of the melting hole puncture the electrode plate 25, in spite of a wound electrode assembly 22 or a laminated electrode assembly 22.

In the foregoing solution, covering the melting hole with the separator 221c can prevent burrs generated during preparation of the melting hole from puncturing the electrode plate 25, while such puncturing affects performance of the battery 10.

FIG. 10 is a cross-sectional view of an electrode plate according to another embodiment of this application. As shown in FIG. 10, the tab portion 253 includes a first tab portion 2531 and a second tab portion 2532, where the first tab portion 2531 is disposed between the body portion 251 and the second tab portion 2532, and in the second direction Y, a size of the first tab portion 2531 is larger than a size of the second tab portion 2532.

In the second direction Y, the size of the first tab portion 2531 is larger than the size of the second tab portion 2532. In other words, the first tab portion 2531 connected to the body portion 251 has a larger size in the second direction Y, which can increase the connection area between the body portion 251 and the tab portion 253, thereby increasing the connection strength between the two. Additionally, the second tab portion 2532 having a smaller size can reduce the space occupied by the entire tab portion 253 in the battery cell 20.

In the foregoing solution, the tab portion 253 includes the first tab portion 2531 and the second tab portion 2532, and the size of the first tab portion 2531 connected to the body portion 251 is made larger than the size of the second tab portion 2532. This not only can increase the connection strength between the tab portion 253 and the body portion 251, but also can reduce the space occupied by the entire tab portion 253 in the battery cell 20.

In some embodiments, the welded zone 255 includes a first welded zone 2551 and a second welded zone 2552, where the first welded zone 2551 is located on the first tab portion 2531, the second welded zone 2552 is located on the second tab portion 2532, and in the second direction Y, a size of the first welded zone 2551 is larger than a size of the second welded zone 2552.

The first welded zone 2551 is located on the first tab portion 2531 that has a larger size in the second direction Y The second welded zone 2552 is located on the second tab portion 2532 that has a smaller size in the second direction Y

In the foregoing solution, the first welded zone 2551 is located on the first tab portion 2531 that has a larger size in the second direction Y, allowing for a larger welding area between the conductive structure 254 and the first tab portion 2531, thereby increasing the connection strength between the two.

As shown in FIG. 8, an active substance layer 2511 is disposed on an outer surface of the body portion 251.

The multiple electrode plates 25 are wound to form the electrode assembly 22. The electrode assembly 22 includes the body portion 251 and the lead-out portion 252. Further, the lead-out portion 252 includes the tab portion 253 and the conductive structure 254. The tab portion 253 is welded to the conductive structure 254 to create an electrical connection. More specifically, the electrode plate 25 includes the metal layer 257 and the non-metal layer 256, where the metal layer 257 is disposed on two sides of the non-metal layer 256. In other words, the conductive structure 254 is welded to the metal layer 257 of the tab portion 253 to form the welded zone 255, and the metal layer 257 of the body portion 251 is coated with the active substance layer 2511.

The current generated by the active substance in the active substance layer 2511 is collected to form a larger current for external output.

In the foregoing solution, with the active substance layer 2511 disposed on the outer surface of the body portion 251, namely, the metal layer 257 of the body portion 251, the active substance layer 2511 can undergo electrochemical reactions during charging and discharging of the battery 10, achieving the conversion between chemical energy and electrical energy.

As shown in FIG. 10, in some embodiments, a first protective layer 2514 is provided at an end of the tab portion 253 close to the body portion 251, where the first protective layer 2514 is disposed between the body portion 251 and the melting zone 26.

The first protective layer 2514 is disposed on a part of the tab portion 253 that is neither covered by the active substance nor connected to the conductive structure 254. The first protective layer 2514 may be directly disposed on the surface of the tab portion 253 farther away from the non-metal layer 256; in other words, the first protective layer 2514 is disposed on the metal layer 257 of the tab portion 253. Alternatively, a coating may be applied on the surface of the tab portion 253 farther away from the non-metal layer 256, and the first protective layer 2514 is disposed on the surface of the coating.

In some embodiments of this application, the first protective layer 2514 is connected to the active substance layer 2511 so that the first protective layer 2514 is fixed to the active substance layer 2511, increasing the bonding strength of the first protective layer 2514 to the electrode plate 25, thereby preventing the first protective layer 2514 from falling off. In this case, an end of the first protective layer 2514 may be connected to the active substance layer 2511, allowing the first protective layer 2514 to cover the junction between the body portion 251 and the tab portion 253. This prevents the metal layer 257 from fracturing, thus affecting the current flow capability of the electrode plate 25. When the slurry is applied, to ensure that the junction can be covered, it may alternatively be that the coating zone covers an end of the active substance layer 2511.

Further, the stiffness of the first protective layer 2514 can be made higher than the stiffness of the metal layer 257. This can further prevent the tab portion 253 from deforming and prevent the metal layer 257 from rupturing.

It should be noted herein that the first protective layer 2514 being disposed between the conductive structure 254 and the active substance layer 2511 means the active substance layer 2511, the first protective layer 2514, the melting zone 26, and the conductive structure 254 being disposed sequentially in the first direction X.

In the foregoing solution, disposing the first protective layer 2514 on the tab portion 253 that is neither covered by the active substance nor connected to the conductive structure 254 can provide support to the tab portion 253, limiting deformation of the tab portion 253. As a result, this prevents fracture of the metal layer 257, thereby improving the current flow capability of the electrode plate 25.

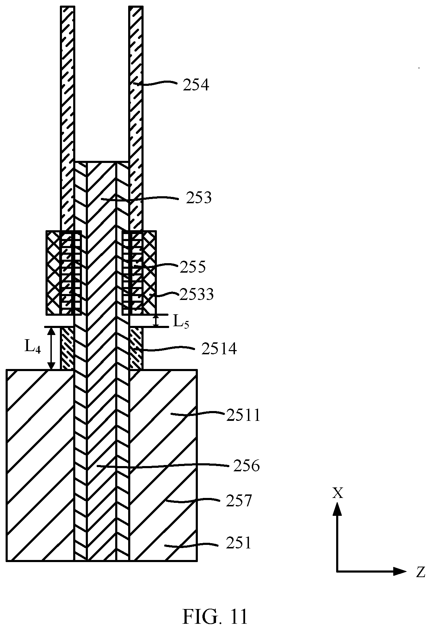

FIG. 11 is a cross-sectional view of an electrode plate according to still another embodiment of this application. As shown in FIG. 11, in the first direction X, a size $L_4$ of the first protective layer 2514 is 0.1 mm to 6 mm.

In the first direction X, if the size $L_4$ of the first protective layer 2514 is smaller than 0.1 mm, the adhesion between the first protective layer 2514 and the tab portion 253 is weak, making them prone to fall off. In addition, the coverage area is small, and consequently, the capability to inhibit deformation of the tab portion 253 is weak and the metal layer 257 is still likely to fracture. In the battery 10, referring to FIG. 3, the tab portion 253 is usually bent to form the first tab 222a (or the second tab 222b) to reduce the space occupied by the tab portion 253 in the third direction Z and increase the energy density of the battery 10. Due to the high stiffness of the first protective layer 2514, the region of the tab portion 253 covered by the first protective layer 2514 cannot be bent. In this case, if the size $L_4$ of the first protective layer 2514 is larger than 4 mm, the bendable portion of the tab portion 253 is reduced, making the tab portion 253 occupy too much space, thus decreasing the energy density of the battery 10. Further, the first protective layer 2514 occupying excessive space also reduces the region for welding the tab portion 253 to the conductive structure 254, reducing the current flow capability between the conductive structure 254 and the tab portion 253.

In the foregoing solution, keeping the size $L_4$ of the first protective layer 2514 in the first direction X within 0.1 mm to 6 mm can not only provide support to the tab portion 253 but also ensure good current flow capability between the conductive structure 254 and the tab portion 253 as well as ensure the energy density of the battery 10.

In some embodiments, in the first direction X, a size of the first protective layer 2514 is 0.5 mm to 4 mm.

In the foregoing solution, keeping the size of the first protective layer 2514 in the first direction X within 0.5 mm to 4 mm can provide support to the tab portion 253 and reserve enough region for the melting zone 26.

As shown in FIG. 11, in the first direction X, the size $L_5$ of the melting zone 26 is 0.01 mm to 2 mm.

The melting zone 26 is provided between the first protective layer 2514 and the conductive structure 254. If the size of the melting zone 26 is too small, a part of the conductive structure 254 connected to the tab portion 253 may overlap with the first protective layer 2514 because of error, causing the conductive structure 254 to tilt and resulting in poor welding to the tab portion 253, thereby affecting the service life of the battery 10. In addition, because the first protective layer 2514 has a high stiffness, the first protective layer 2514 may probably damage the welding device.

Further, if the size $L_5$ of the melting zone 26 in the first direction X is smaller than 0.01 mm, the conductive structure 254 may still overlap with the first protective layer 2514 because of error. If the size $L_5$ of the melting zone 26 in the first direction X is larger than 2 mm, when the tab portion 253 is bent, the part of the tab portion 253 corresponding to the melting zone 26 creases, leading to fracture of the metal layer 257.

In the foregoing solution, keeping the size $L_5$ of the melting zone 26 in the first direction X within 0.01 mm to 2 mm can ensure the normal service life of the battery 10.

In some embodiments, in the first direction X, a size $L_5$ of the melting zone 26 is 0.05 mm to 1.5 mm.

In the foregoing solution, keeping the size $L_5$ of the melting zone 26 in the first direction X within 0.05 mm to 1.5 mm can further ensure the normal service life of the battery 10.

Still referring to FIG. 11, in some embodiments, a second protective layer 2533 is disposed on a surface of the welded zone 255 farther away from the tab portion 253.

Since the first end of the conductive structure 254 is welded to the tab portion 253 to form the welded zone 255, the surface of the welded zone 255 may become uneven. As a result, the separator 221c may be punctured, posing a short circuit risk.

In the foregoing solution, disposing the second protective layer 2533 on the surface of the welded zone 255 farther away from the tab portion 253 can separate the surface of the welded zone 255 from the separator 221c, preventing the separator 221c from being punctured, thus further improving the safety performance of the battery 10.

In some embodiments, both the first protective layer 2514 and the second protective layer 2533 are made of an insulating material.

In this embodiment of this application, the insulating material may be at least one of alumina trihydrate or hydroxide alumina. The first protective layer 2514 and the second protective layer 2533 may further include a binder. The binder is mixed with the insulating material to prepare a slurry. The slurry is applied on the surface of the tab portion 253 or the surface of the welded zone 255 farther away from the tab portion 253, and then cured to form the first protective layer 2514 and the second protective layer 2533.

In the foregoing solution, both the first protective layer 2514 and the second protective layer 2533 being made of an insulating material can prevent the first protective layer 2514 and second protective layer 2533 from affecting a current flow path of the electrode plate 25 in the electrode assembly 22, thus ensuring the safety of the electrical connection of the electrode plate 25.

Still referring to FIG. 10, in some embodiments, the size $L_6$ of the melting zone 26 in the second direction Y is

$$\frac{A}{H_1 * C}$$

where A represents the current flow area of the battery cell 20, $H_1$ represents the total thickness of the conductive structure 254 in the third direction Z, and C represents the number of the conductive structures 254.

Specifically, as shown in FIG. 6, FIG. 7, or FIG. 9, $H_1$ may be the total thickness of the conductive structure 254 in the third direction Z. It should be understood that the electrode assembly 22 may have multiple conductive structures 254, and after electrode plates 25 are wound, the multiple conductive structures 254 are opposite in position. During the assembly of the battery cell 20, the multiple conductive structures 254 are stacked together and connected to one electrode terminal 241. Therefore, the number C of conductive structures 254 connected to one electrode terminal 241 is introduced in the formula. For example, in FIG. 5, there are four conductive structures 254, and C takes the value of four in the formula for calculation; and in FIG. 6, there are two conductive structures 254, and C takes the value of two in the formula for calculation.

It should be noted herein that A represents the current flow area of the battery cell 20. The value of A is not limited in any way in this application, meaning that A can be any constant value. The value of A is related to the specific performance of the battery 10 and is not discussed in detail herein.

In the foregoing solution, a specific value is calculated using the formula, and that value is used as the size $L_6$ of an end of the melting zone 26 close to the body portion 251 in the second direction Y This not only can prevent safety accidents caused by excessive overcurrent in the electrode assembly 22, thereby improving the safety performance of the battery 10, but also can allow for a direct connection between the conductive structure 254 and the end cover 24, thereby increasing the weight energy density of the battery 10, reducing costs, and improving the production efficiency of the battery 10.

In this embodiment of this application, if A is 8 $mm^2$, if the total thickness $H_1$ of the conductive structures 254 in the third direction Z is 1 $\mu m$, and if the number C of conductive structures 254 connected to one electrode terminal 241 is 80, the size $L_6$ of an end of the welded zone 255 close to the body portion 251 in the second direction Y needs to be 100 mm to ensure that the melting zone 26 can serve as a fuse, so as to ensure the safety of the battery 10.

It should be understood that the specific parameter settings mentioned above are only examples for describing the embodiments of this application and do not impose limitations on this application.

An embodiment of this application further provides a battery 10, where the battery 10 may include the battery cell 20 in the foregoing embodiments. In some embodiments, the battery 10 may also include other structures such as a box 11 and a busbar. Details are not described herein.

An embodiment of this application further provides an electric device, where the electric device may include the battery 10 in the foregoing embodiments. Optionally, the electric device can be a vehicle 1, ship, spacecraft, or the like, which is not limited in the embodiment of this application.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling in the scope of the claims.

**Claims**

1. A battery cell, **characterized by** comprising:

   an electrode assembly (22) comprising a body portion (251) and a lead-out portion (252) that are disposed in a first direction (X), the body portion (251) being electrically connected to an electrode terminal (241) via the lead-out portion (252); wherein
   the lead-out portion (252) comprises a tab portion (253) and a conductive structure (254), wherein a first end of the conductive structure (254) is welded to the tab portion (253) to form a welded zone (255), a second end of the conductive structure (254) is connected to the electrode terminal (241), and the conductive structure (254) extends along a direction leaving the body portion (251); and
   a melting zone (26) is provided between the welded zone (255) and the body portion (251).

2. The battery cell according to claim 1, **characterized in that** in a second direction (Y), a size of the melting zone (26) is larger than a size of the conductive structure (254), the second direction (Y) being perpendicular to the first direction (X) and parallel to the tab portion (253).

3. The battery cell according to claim 1 or 2, **characterized in that** in the second direction (Y), the size of the melting zone (26) is not smaller than half the size of the body portion (251).

4. The battery cell according to claim 2 or 3, **characterized in that** the body portion (251) comprises a straight portion (2512) and a bent portion (2513).

5. The battery cell according to claim 4, **characterized in that** in the second direction (Y), the size of the melting zone (26) is not larger than a size of the straight portion (2512).

6. The battery cell according to any one of claims 2 to 5, **characterized in that** the electrode assembly (22) comprises multiple electrode plates (25), wherein the electrode plate (25) comprises a non-metal layer (256) and a metal layer (257) disposed on two sides of the non-metal layer (256), and the conductive structure (254) is welded to the metal layer (257) of the tab portion (253) to form the welded zone (255).

7. The battery cell according to claim 1, **characterized in that** the electrode assembly (22) comprises multiple electrode plates (25), wherein the electrode plate (25) comprises a non-metal layer (256) and a metal layer (257) disposed on two sides of the non-metal layer (256), and the conductive structure (254) is welded to the metal layer (257) of the tab portion (253) to form the welded zone (255).

8. The battery cell according to claim 7, **characterized in that** in a second direction (Y), a size of the melting zone (26) is smaller than a size of the conductive structure (254), the second direction (Y) being perpendicular to the first direction (X) and parallel to the tab portion (253).

9. The battery cell according to claim 7, **characterized in that** in a third direction (Z), a size of the melting zone (26) is smaller than a size of the conductive structure (254), the third direction (Z) being perpendicular to the first direction (X) and perpendicular to the tab portion (253).

10. The battery cell according to claim 9, **characterized in that** the melting zone (26) is provided with a melting hole.

11. The battery cell according to claim 10, **characterized in that** the battery cell (20) further comprises a separator (221c), wherein the separator (221c) covers the melting hole.

12. The battery cell according to any one of claims 2 to 11, **characterized in that** the tab portion (253) comprises a first tab portion (2531) and a second tab portion (2532), wherein the first tab portion (2531) is disposed between the body portion (251) and the second tab portion (2532), and in the second direction (Y), a size of the first tab portion (2531) is larger than a size of the second tab portion (2532).

13. The battery cell according to claim 12, **characterized in that** the welded zone (255) comprises a first welded zone (2551) and a second welded zone (2552), wherein the first welded zone (2551) is located on the first tab portion (2531), the second welded zone (2552) is located on the second tab portion (2532), and in the second direction (Y), a size of the first welded zone (2551) is larger than a size of the second welded zone (2552).

14. The battery cell according to any one of claims 1 to 13, **characterized in that** a first protective layer (2514) is provided at an end of the tab portion (253) close to the body portion (251), wherein the first protective layer (2514) is disposed between the body portion (251) and the melting zone (26).

**15.** The battery cell according to claim 14, **characterized in that** in the first direction (X), a size of the first protective layer (2514) is 0.1 mm to 6 mm.

**16.** The battery cell according to claim 14 or 15, **characterized in that** in the first direction (X), a size of the first protective layer (2514) is 0.5 mm to 4 mm.

**17.** The battery cell according to any one of claims 1 to 16, **characterized in that** in the first direction (X), a size of the melting zone (26) is 0.01 mm to 2 mm.

**18.** The battery cell according to claim 17, **characterized in that** in the first direction (X), a size of the melting zone (26) is 0.05 mm to 1.5 mm.

**19.** The battery cell according to any one of claims 1 to 18, **characterized in that** a second protective layer (2533) is provided on a surface of the welded zone (255) away from the tab portion (253).

**20.** The battery cell according to claim 19, **characterized in that** both the first protective layer (2514) and the second protective layer (2533) are made of an insulating material.

**21.** A battery, **characterized by** comprising the battery cell (20) according to any one of claims 1 to 20.

**22.** An electric device, **characterized by** comprising the battery (10) according to claim 21, wherein the battery (10) is configured to supply electric energy.

1

FIG. 1

10

FIG. 2

## 20

FIG. 3

<u>22</u>

221c    221b    221a

FIG. 4

<u>22</u>

FIG. 5

A

FIG. 6

A

FIG. 7

FIG. 8

A

FIG. 9

25

FIG. 10

FIG. 11

| INTERNATIONAL SEARCH REPORT | International application No. |
| | **PCT/CN2023/074014** |

**A.    CLASSIFICATION OF SUBJECT MATTER**

H01M4/02(2006.01)i;   H01M50/533(2021.01)i;   H01M50/538(2021.01)i

According to International Patent Classification (IPC) or to both national classification and IPC

**B.    FIELDS SEARCHED**

Minimum documentation searched (classification system followed by classification symbols)

IPC:  H01M

Documentation searched other than minimum documentation to the extent that such documents are included in the fields searched

Electronic data base consulted during the international search (name of data base and, where practicable, search terms used)

CNABS; CNTXT; ENTXT; ENTXTC; DWPI; CNKI: 电极, 极片, 正极, 负极, 极耳, 导电, 弯折, 弯曲, 集流体, 集电体, 绝缘层, 焊接, 电池, electrode, positive, negative, tab, conductivity, bend+, current, collector, insulation, layer, welding, battery

**C.    DOCUMENTS CONSIDERED TO BE RELEVANT**

| Category* | Citation of document, with indication, where appropriate, of the relevant passages | Relevant to claim No. |
|---|---|---|
| Y | CN 209087968 U (NINGDE CONTEMPORARY AMPEREX TECHNOLOGY CO., LTD.) 09 July 2019 (2019-07-09) description, paragraphs 4-80, and figures 1-7 | 1-22 |
| Y | CN 108598491 A (NINGDE CONTEMPORARY AMPEREX TECHNOLOGY CO., LTD.) 28 September 2018 (2018-09-28) description, paragraphs 40-72, and figures 1-11 | 1-22 |
| Y | CN 115425372 A (JIANGSU CONTEMPORARY AMPEREX TECHNOLOGY LIMITED et al.) 02 December 2022 (2022-12-02) description, paragraphs 26-75, and figures 1-9 | 1-22 |
| Y | CN 214505731 U (ENVISION AESC TECHNOLOGY (JIANGSU) CO., LTD. et al.) 26 October 2021 (2021-10-26) description, paragraphs 34-43, and figures 1-2 | 1-22 |
| Y | CN 204927440 U (CONTEMPORARY AMPEREX TECHNOLOGY LIMITED) 30 December 2015 (2015-12-30) description, paragraphs 54-68, and figures 1-8 | 1-22 |

| ☑ Further documents are listed in the continuation of Box C. | ☑ See patent family annex. |

| \*    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| **21 June 2023** | **23 June 2023** |

| Name and mailing address of the ISA/CN | Authorized officer |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/074014**

**C.    DOCUMENTS CONSIDERED TO BE RELEVANT**

| Category* | Citation of document, with indication, where appropriate, of the relevant passages | Relevant to claim No. |
|---|---|---|
| A | CN 217719892 U (NINGDE CONTEMPORARY AMPEREX TECHNOLOGY CO., LTD.) 01 November 2022 (2022-11-01) entire document | 1-22 |

Form PCT/ISA/210 (second sheet) (July 2022)

<table>
<tr><td colspan="2">INTERNATIONAL SEARCH REPORT<br>Information on patent family members</td><td colspan="2">International application No.<br><br>**PCT/CN2023/074014**</td></tr>
</table>

| Patent document cited in search report | | | Publication date (day/month/year) | Patent family member(s) | | | Publication date (day/month/year) |
|---|---|---|---|---|---|---|---|
| CN | 209087968 | U | 09 July 2019 | US | 2021119303 | A1 | 22 April 2021 |
| | | | | US | 11271273 | B2 | 08 March 2022 |
| | | | | EP | 3633766 | A1 | 08 April 2020 |
| | | | | EP | 3633766 | A4 | 29 July 2020 |
| | | | | WO | 2020024492 | A1 | 06 February 2020 |
| | | | | US | 2020235368 | A1 | 23 July 2020 |
| | | | | US | 11367932 | B2 | 21 June 2022 |
| | | | | JP | 2021532555 | A | 25 November 2021 |
| | | | | JP | 7187667 | B2 | 12 December 2022 |
| | | | | KR | 20210024632 | A | 05 March 2021 |
| CN | 108598491 | A | 28 September 2018 | PL | 3588620 | T3 | 14 November 2022 |
| | | | | EP | 3588620 | A1 | 01 January 2020 |
| | | | | EP | 3588620 | B1 | 31 August 2022 |
| | | | | US | 2019393511 | A1 | 26 December 2019 |
| | | | | US | 11133508 | B2 | 28 September 2021 |
| CN | 115425372 | A | 02 December 2022 | None | | | |
| CN | 214505731 | U | 26 October 2021 | None | | | |
| CN | 204927440 | U | 30 December 2015 | None | | | |
| CN | 217719892 | U | 01 November 2022 | None | | | |

Form PCT/ISA/210 (patent family annex) (July 2022)